Europäisches Patentamt

European Patent Office

Office européen des brevets

(11) Veröffentlichungsnummer: **0 429 433 A2**

## (12) EUROPÄISCHE PATENTANMELDUNG

(21) Anmeldenummer: **91101481.9**

(22) Anmeldetag: **20.04.88**

(51) Int. Cl.5: **A01D 78/10**

Diese Anmeldung ist am 05 - 02 - 1991 als Teilanmeldung zu der unter INID-Kode 60 erwähnten Anmeldung eingereicht worden.

(30) Priorität: **22.04.87 DE 3713474**
**22.01.88 DE 3801804**
**22.01.88 DE 3801803**
**18.12.87 DE 8716698 U**

(43) Veröffentlichungstag der Anmeldung:
**29.05.91 Patentblatt 91/22**

(60) Veröffentlichungsnummer der früheren Anmeldung nach Art. 76 EPÜ: **0 289 864**

(84) Benannte Vertragsstaaten:
**AT BE CH DE FR GB LI NL**

(71) Anmelder: **H. Niemeyer Söhne GmbH & Co. KG**
**Heinrich-Niemeyer-Strasse 52, Postfach 11 65**
**W-4446 Hörstel(DE)**

(72) Erfinder: **Ungruh, Josef**
**Birkenhahnweg 7**
**W-4440 Rheine(DE)**
Erfinder: **Kosel, Hans Dieter**
**Barbarastrasse 30**
**W-4530 Ibbenbüren(DE)**

(74) Vertreter: **Busse & Busse Patentanwälte**
**Postfach 1226 Grosshandelsring 6**
**W-4500 Osnabrück(DE)**

(54) **Heuwerbungsmaschine.**

(57) Die Erfindung bezieht sich auf eine Heuwerbungsmaschine mit einem an einen landwirtschaftlichen Schlepper anhäng- oder an dessen Dreipunkthydraulik anbaubaren Querträger, der ein Mittelträger 1 und zumindest jeweils einen beidseits des Mittelträgers 1 vorgesehenen, um eine etwa fahrtrichtungsparallele Achse 2,3 gelenkig verbundenen Seitenträger 4.1,4.2,5.1,5.2 umfaßt, mit einer Anzahl von in Betriebsstellung zum Boden hin gerichtete Rechzinken 11 aufweisenden Kreiselrechen 6.1,6.2,7,8,9.1,9.2, die am Querträger um Hochachsen 12 drehbar gelagert und mittels einer im Querträger gelagerten Antriebswelle 29 antreibbar sind, sowie mit Laufrädern 14, welche die Maschine während des Betriebs auf dem Boden abstützen und jeweils unter einem Kreiselrechen 6.1,6.2,7,8,9.1,9.2 geordnet sind. Dabei ist ein Druckmittelantrieb 17,18 zum Hochschwenken der Seitenträger 4.1,4.2,5.1,5.2 und zum Festlegen einer Transportstellung vorgesehen, wobei jedem Seitenträger 4.1,4.2,5.1,5.2 ein Kreiselrechen zugeordnet ist, der sich am Außenendbereich seines Seitenträgers abstützt. Zudem sind die äußeren Kreiselrechen n 6.1,9.2 um eine Zusatzachse in eine Transportschutzstellung überführbar. Die Zusatzachsen 23,24 sind fahrtrichtungsparallel ausgerichtet, wobei zumindest einer der einem äußeren Seitenträger 4.2,5.2 zugeordneten Kreiselrechen 6.1,9.2 mitsamt seinem zugehörigen Seitenträger um mehr als 90˚ in eine Transportschutzstellung klappbar ist, in der sich in einem oberhalb des Mittelträgers 1 gelegenen sowie zumindest bereichsweise seitlich durch einen Transportschutzstellung überführten mittleren Seitenträger 4.1,5.1 begrenbaren Raum erstreckt.

Fig. 1

## HEUWERBUNGSMASCHINE

Die Erfindung bezieht sich auf eine Heuwerbungsmaschine in einer Ausbildung gemäß dem Oberbegriff des Anspruchs 1.

Bei einer bekannten Maschine mit einem Querträger, der beidseits des Mittelträgers je einen Seitenträger mit zugeordnetem Kreiselrechen umfaßt (EP-A 02 03 023), bestehen die Seitenträger aus einem Innen- und Außenteil, wobei der Außenteil um die den beiden Teilen gemeinsame Längsmittelachse des Seitenträgers relativ zum Innenteil um 180° zu verschwenken ist. Dies ermöglicht, die äußeren Kreiselrechen in eine Transportschutzstellung zu überführen, in der sich bei hochgeklappten Seitenträgern die Rechzinken mit ihren Enden zur Gerätemitte hin erstrecken.

Das Verschwenken der Kreiselrechen um die Längsmittelachse der Seitenträger oder eine dazu leicht geneigte Achse in die Transportschutzstellung kann unabhängig vom Hochschwenken der Seitenträger, d. h. vor oder nach dem Hochschwenken, von Hand vorgenommen werden. In diesem Fall muß eine Bedienperson vom Fahrersitz absteigen, die jeweiligen Verriegelungen lösen, die Verschwenkung der Außenteile der Seitenträger vornehmen, die Verriegelung wieder herstellen und schließlich den Schlepper wieder besteigen, bevor eine Transportfahrt angetreten werden kann. Dies ist zeitraubend, umständlich, mit einigem Kraftaufwand sowie auch mit einer gerissen Gefährdung der Bedienperson durch die Zinkenspitzen verbunden, da sich die Bedienperson im Bewegungsbereich der Rechzinken beim Schwenken der Kreiselrechen in die Transportschutzstellung befindet.

Statt dessen kann das Verschwenken der Rechzinken in die Transportschutzstellung auch während des Hochschwenkens der Seitenträger durch ein Getriebe erfolgen, das eine von der Hochschwenkbewegung der Seitenträger abgeleitete Schwenkbewegung auf den den Kreiselrechen tragenden Außenteil des Seitenträgers überträgt. Ein solches, eine Zahnstange und Zahnsegmente sowie Kurbeln und Übertragungshebel umfassendes Getriebe ist baulich außerordentlich aufwendig und zudem sehr empfindlich, so daß es für ein zuverlässiges Funktionieren der regelmäßigen Wartung bedarf. Insbesondere aber liegen die nach innen gerichteten Rechzinken mit ihren Verletzungsgefahren hervorrufenden Enden in Körperhöhe von Personen, so daß Gefahren von Verletzungen gegenüber einer nach außen gerichteten Lage der Rechzinken zwar gemindert, nicht jedoch beseitigt sind.

Bei einer anderen bekannten Maschine mit einem Querträger, der einen Mittelträger sowie beidseits des Mittelträgers je einen mittleren und äußeren Seitenträger umfaßt (DE-GM 86 25 78d.6), ist der mittlere Seitenträger aus der Arbeitsstellung hochzuklappen in eine annähernd aufrechte Transportstellung. Der an den mittleren Seitenträgern nahe der Hochachse seines Kreiselrechens gelenkig angreifende äußere Seitenträger ist mitsamt dem äußeren Kreiselrechen in einer zur Gerätemitte hin um die Zusatzachse verschwenkte Transportschutzstellung zu überführen, in der die Längsmittelachsen der äußeren Seitenträger schräg nach oben verlaufend ausgerichtet sind und die Seitenträger zueinander gewissermaßen eine Dreieckseitenschenkeln entsprechende Lage einnehmen. Die dadurch bedingte Transporthöhe der Maschine ist erheblich, beeinflußt die Schwerpunktlage des Gerätes zum Schlepper hin ungünstig, hat damit eine verminderte Kippstabilität und macht ein Durchfahren von Toren und dgl. während der Transportfahrt in vielen Fällen unmöglich. Um eine Dreieckseitenschenkeln entsprechende Lage einnehmen zu können, d. h., daß die Endbereiche der beiden äußeren Seitenträger einander in der Transportstellung annähernd berühren, sind die Kreiselrechen der äußeren Seitenträger in der Regel manuell im Verlaufe der Überführung der Seitenträger in diese Transportstellung derart zu verdrehen, daß sich Rechzinken der beiden Kreiselrechen einander kreuzen können, was zu zeitlichen Verzögerungen führen und Justierarbeiten im Bereich von Rechzinken mit nicht unerheblichem Verletzungsrisiko erforderlich machen kann.

Der Erfindung liegt die Aufgabe zugrunde, mit baulich einfachen Mitteln eine Heuwerbungsmaschine der eingangs genannten Art zu schaffen, bei der in einer Ausbildung mit je zwei Seitenträgern beidseits des Mittelträgers jeweils äußeren Seitenträger in eine Transportstellung mit gegenüber bekannten Geräten einer verringerten Transporthöhe sowie einer verbesserten Schwerpunktlage zum Schlepper hin zu überführen sind.

Die Erfindung löst diese Aufgabe ausgehend von einer Heuwerbungsmaschine gemäß dem Oberbegriff des Anspruchs 1 mit den Merkmalen des kennzeichnenden Teils dieses Anspruchs. Hinsichtlich wesentlicher weiterer Ausgestaltungen der Erfindung wird auf die Ansprüche 2 bis 7 verwiesen.

Die Heuwerbungsmaschine nach der Erfindung ist mit baulich einfachen Mitteln als Sechskreiselrechenmaschine ausgebildet, bei der sich ein äußerer oder die jeweils äußeren Kreiselrechen um mehr als 90° Grad einwärts, d. h. zur Gerätemitte hin, verschwenken bzw. klappen lassen, so daß die Rechzinken bei einer Schwenkbewegung von mehr als 90° in einen zumindest bereichsweise durch Seitenträgerteile seitlich begrenzten Transportraum zu bringen sind, der sich oberhalb des Mittelträgers erstreckt. Damit läßt sich eine Transporthöhe der Maschine in der Transportstellung verwirklichen, die gegenüber bekannten Maschinen dieser Art deutlich geringer ist. Damit geht auch eine weit verbesserte Schwerpunktlage der Maschine einher.

Eine äußerst kompakte und hinsichtlich der Gesamtschwerpunktlage günstige Maschinenausführung ergibt sich z. B. bei dieser Maschinenausbildung, bei der die äußeren Seitenträger mit fest an diesen angeordneten äußeren Kreiselrechen um die Zusatzachsen einwärts so einzuklappen bzw. einzuschwenken sind, daß die äußeren Enden von Rechzinken in der Transportschutzstellung in etwa am Mittelträger anliegen.Hierbei entspricht die Transporthöhe einer Maschinen-ausführung mit insgesamt sechs Kreiselrechen im wesentlichen der Transporthöhe einer Maschine mit vier Kreiselrechen und jeweils nur einem in die Vertikale verschwenkbaren Seitenträger.

Weitere Einzelheiten und Vorteile ergeben sich aus der nachfolgenden Beschreibung und der Zeichnung, in der ein Ausführungsbeispiel des Gegenstands der Erfindung schematisch näher veranschaulicht ist. In der Zeichnung zeigen:

Fig.1     eine schematische Rückansicht einer Heuwerbungsmaschine nach der Erfindung mit sechs Kreiselrechen in Betriebsstellung der Teile;

Fig. 2     eine Draufsicht auf das Ausführungsbeispiel nach Fig. 1, und

Fig. 3     eine Darstellung des Ausführungsbeispiels nach Fig. 1 mit in Transportstellung überführten Teilen.

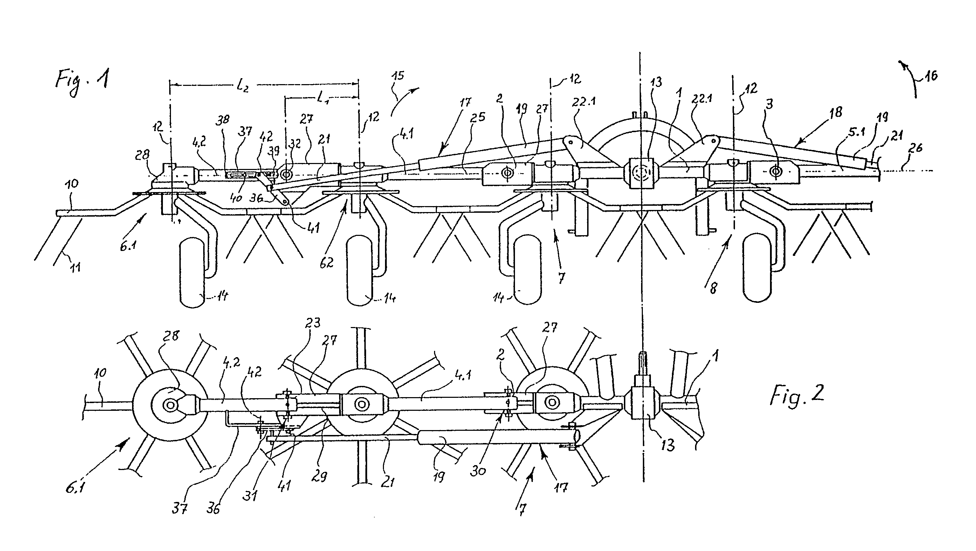

Bei dem in der Zeichnung veranschaulichten Ausführungsbeispiel sind gleichwirkende Bauteile mit gleichen Bezugsziffern versehen. Im einzelnen besteht die veranschaulichte Heuwerbungsmaschine aus einem rohrförmigen, an einen nicht dargestellten landwirtschaftlichen Schlepper anbaubaren Querträger, der einen Mittelträger 1 sowie mit diesem jeweils um eine fahrtrichtungsparallele Achse 2, 3 gelenkig verbundene Seitenträger 4.1, 4.2, 5.1, 5.2 umfaßt. Die Heuwerbungsmaschine ist in dem Ausführungsbeispiel nach den Fig. 1 bis 3 mit einer Anzahl von Kreiselrechen 6.1, 6.2, 7, 8, 9.1, 9.2 versehen, die an den Außenenden von sternförmig angeordneten Armen 10 Rechzinken 11 aufweisen, welche in Betriebsstellung der Teile zum Boden hin gerichtet sind. Sämtliche Kreiselrechen sind am Querträger um Hochachsen 12 drehbar gelagert, wobei zwei Kreiselrechen 7, 8 dem Mittelträger 1 und je ein Kreiselrechen 6.1, 6.2 bzw. 9.1, 9.2 den Seitenträgern 4.1, 4.2 bzw. 5.1, 5.2 zugeordnet ist. Die Kreiselrechen sind dabei mittels einer im Querträger gelagerten Antriebswelle antreibbar, die ihre Drehbewegung von einem mit der Zapfwelle des Schleppers verbindbaren Zentralgetriebe 13 her erhält. Auf Einzelheiten in der Ausbildung der Antriebswelle, soweit sie von Bedeutung sind, wird weiter unten noch eingegangen. Die Heuwerbungsmaschine umfaßt ferner Laufräder 14, welche die Maschine während des Betriebs auf dem Boden abstützen und jeweils unter einem Kreiselrechen angeordnet sind.

Die Seitenträger 4.1, 5.1, 4.2, 5.2 der dargestellten Maschinen mit sechs Kreiselrechen sind mitsamt den ihnen am äußeren Ende zugeordneten Kreiselrechen 6.1, 6.2, 9.1, 9.2 um die fahrtrichtungsparallelen Schwenkachsen 2 bzw. 3 in Richtung der eingezeichneten Pfeile 15, 16 aus ihrer im Betrieb im wesentlichen horizontalen Stellung in eine Transportstellung hochschwenkbar. Zum Hoch- und Einschwenken der Seitenträger 4.1, 4.2, 5.1, 5.2 sind Druckmittelantriebe 17, 18 vorgesehen, deren Zylinder 19 gelenkig an einem parallel oberhalb des Mittelträgers 1 an diesem ortsfest abgestützten Flanschteil 22.1 angreifen und deren Kolbenstangen 21 gelenkig mit einem Stellhebel 36 an den Seitenträgern 4.2 bzw. 5.2 verbunden sind.

Bei dem in den Fig. 1 bis 3 veranschaulichten Ausführungsbeispiel sind die äußeren Seitenträger 4.2, 5.2 mitsamt den diesen zugeordneten äußeren Kreiselrechen 6.1, 9.2 um die fahrtrichtungsparallelen Zusatzachsen 23, 24 einwärts gegenüber den in Transportstellung vertikal ausgerichteten mittleren Seitenträgern 4.1, 5.1 um mehr als $90°$ zu verschwenken, wonach diese Teile in einem Transportraum gelegen sind, der sich oberhalb des Mittelträgers 1 erstreckt und der seitlich in der Transportstellung durch die mittleren Seitenträger 4.1, 5.1 sowie an deren äußeren Enden angeordnete Gabelteile 27 zur gelenkigen Halterung der äußeren Seitenträger 4.2, 5.2 begrenzt ist.

Zur baulichen Verwirklichung dieser Anordnung weisen die Seitenträger 4.1, 5.1 an ihrem Außenende eine Gabel 27 auf, deren Schenkel die äußeren Seitenträger 4.2, 5.2 mit den Kreiselrechen 6.1 bzw. 9.2 um die Zusatzachse 23, 24 klappbar abstützen.

Ein Lager- und Getriebegehäuse 28 bildet gewissermaßen das äußerste Ende dieser zugeordneten Seitenträger 4.2, 5.2 bzw. eine axiale Verlängerung desselben und umschließt - ebenso wie die Seitenträger 4.2, 5.2 - den zugehörigen Teil der Antriebswelle 29, die sowohl im Bereich der Achsen 2, 3, als auch im Bereich der Zusatzachsen 23, 24 je mit einem Kreuzgelenk 30 bzw. 31 versehen ist. Die Gelenkachsen dieser Kreuzgelenke 30, 31 liegen mit der Achse 2, 3 bzw. der Zusatzachse 23, 24 jeweils in einer gemeinsamen Ebene.

Der Lageabstand $l_1$ des Schnittpunktes einer Zusatzachse 23, 24 mit der entsprechenden Längsmittelachse 25, 26 der Seitenträger hat gemäß Fig. 1 im Verhältnis zum Lageabstand $l_2$ der Hochach-

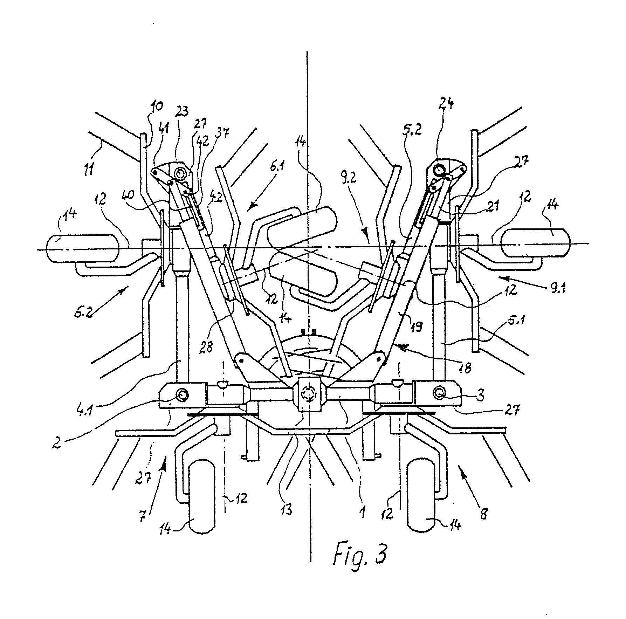

sen 12 der Kreiselrechen 6.1 zu 6.2 bzw. 9.1, 9.2 der jeweiligen Seitenträger zueinander wiederum ein derartiges Maß, daß das Verhältnis von $l_1$ zu $l_2$ größer oder gleich 0,3 ist. Der seitliche Lageabstand $l_1$ der jeweiligen Zusatzachsen 23, 24 ist durch die Abmessungen des Gabelteiles 27, in dem die äußeren Seitenträger 4.2, 5.2 gelenkig gehaltert sind, in baulich einfacher Weise zu variieren. In dem veranschaulichten Ausführungsbeispiel gemäß Fig. 1 hat dieses jeweilige Gabelteil 27 eine derartige Länge, daß eine Einwärtsschwenkbewegung der äußeren Seitenträger 4.2, 5.2 mit den jeweils zugeordneten Kreiselrechen 6.1, 9.2 so weit durchzumachen ist, daß die in der Transportschutzstellung unteren Arme 10 bzw. Rechzinken 11 nahe dem Mittelträger 1 enden (Fig. 3). Bei den gewählten Größenverhältnissen in dem veranschaulichten Ausführungsbeispiel ergibt sich hierbei ein Verhältnis $l_1$ zu $l_2$ von ca. 0,4, wobei die Hochachsen 12 der äußeren Kreiselrechen 6.1, 9.2 in der Transportschutzstellung die Horizontale unter einem Winkel von etwa 20° schneiden. In dieser Transportschutzstellung hat die Maschine eine Transporthöhe, wie sie in etwa von einem Gerät mit insgesamt vier Kreiselrechen bekannter Ausbildung entspricht, wobei allerdings die einwärts oberhalb des Mittelträgers gelegenen äußeren Seitenträger mitsamt ihren Teilen demgegenüber die Gesamtschwerpunktlage der Maschine noch günstig beeinflussen und in diesem Raum ohne Verletzungsrisiko für Bedienpersonen sicher gelegen sind. Um insbesondere die äußeren Seitenträger in diese Transportschutzstellung ohne Vergrößerung der Maschinenbreite überführen zu können, sind die Laufräder 14 der äußeren Seitenträger 4.2, 5.2 gegenüber den Hochachsen 12 der äußeren Kreiselrechen 6.1, 9.2 seitlich zur jeweiligen Außenseite der Maschine derart versetzt angeordnet, daß sie in der Transportschutzstellung (Fig. 3) übereinander zu liegen in der Lage sind. Irgendwelche Behinderungen beim Verschwenken der Seitenträger fallen nicht an. Dazu sind die Laufräder 14 über entsprechend abgekröpfte Halter befestigt. Die Laufräder 14 des Mittelträgers 1 der Maschine sind ebenfalls gegenüber den Hochachsen 12 der Kreiselrechen 7 bzw. 8 versetzt, wodurch sich in der Transportschutzstellung eine verbesserte Kippstabilität und damit Standsicherheit ergibt.

Bei dem Ausführungsbeispiel nach den Fig. 1 bis 3 ist für beide Seitenträgereinheiten jeweils ein Druckmittelantrieb 17, 18 vorgesehen, der einenends über das Flanschteil 22.1 mit dem Mittelträger 1 verbunden ist und anderenends im Mittelbereich des Stellhebels 36 gelenkig angreift. Ein Ende des Stellhebels 36 ist längsverschieblich und gelenkig an einem Führungskulissenteil 37 geführt, das an dem äußeren Seitenträger 4.2 bzw. 5.2 gehalten ist und dessen Führungskulisse Endanschläge 38 und 39 aufweist. Mit seinem gegenüberliegenden Ende ist der Stellhebel 36 an einem Anschlußverbindungsteil 40 der Gabel 27 angelenkt, wobei die Lage der Gelenke 41, 42 und die der Endanschläge 38, 39 jeweils so gewählt ist, daß beim Einfahren der Druckmittelantriebe 17, 18 der Stellhebel nach Anliegen am inneren Endanschlag 39 beide Seitenträger 4.1, 4.2 in die Transportstellung überführt, so daß in baulich einfacher Weise auch bei diesem Ausführungsbeispiel mit jeweils nur einem Druckmittelantrieb je Seitenträgereinheit die Maschinenteile in die Transportstellung zu überführen sind.

Anstelle des Stellhebels 36 mit der Führungskulisse 37 kann auch irgendeine andere geeignete Antriebs- oder Antriebsübertragungsvorrichtung vorgesehen sein, z. B. in Gestalt eines unabhängigen Druckmittelantriebes, dessen Beaufschlagung auf die Beaufschlagung für Druckmittelantriebe 17 abgestimmt sein kann. Die Schwenkachsen 2, 3, 23 und 24 sowie das Gelenk 32 sind bei den beschriebenen Ausführungsbeispielen fahrtrichtungsparallel ausgerichtet, jedoch können hier gewisse Abweichungen vorgenommen werden, die ein gewisses Maß nicht überschreiten sollten. Gleichfalls ist es möglich, daß die Seitenträger bzw. die Kreiselrechen derart baulich vorgesehen sind, daß sich die Hochachsen 12 der Kreiselrechen der äußeren Seitenträger in der Betriebsstellung nach vorn zur Horizontalen neigen, wodurch erreicht werden kann, daß sich beim Anheben der Maschine die in der Transportstellung befindlichen Kreiselrechen nicht zu nahe an den Schlepper heranbewegen.

## Ansprüche

1. Heuwerbungsmaschine mit einem an einen landwirtschaftlichen Schlepper anhäng- oder an dessen Dreipunkthydraulik anbaubaren Querträger, der einen Mittelträger (1) und zumindest jeweils einen beidseits des Mittelträgers (1) vorgesehenen, um eine etwa fahrtrichtungsparallele Achse (2, 3) gelenkig verbundenen Seitenträger (4.1, 4.2, 5.1, 5.2) umfaßt, mit einer Anzahl von in Betriebsstellung zum Boden hin gerichtete Rechzinken (11) aufweisenden Kreiselrechen (6.1, 6.2, 7, 8, 9.1, 9.2), die am Querträger um Hochachsen (12) drehbar gelagert und mittels einer im Querträger gelagerten Antriebswelle (29) antreibbar sind, mit Laufrädern (14), welche die Maschine während des Betriebs auf dem Boden abstützen und jeweils unter einem Kreiselrechen (6.1, 6.2, 7, 8, 9.1, 9.2) angeordnet sind, und mit einem den Seitenträgern (4.1, 4.2, 5.1, 5.2) zugeordneten Druckmittelantrieb (17, 18) zum Hochschwenken der Seitenträger (4.1, 4.2, 5.1, 5.2) und Festlegen in einer Transportstellung, wobei jedem Seitenträger (4.1, 4.2, 5.1, 5.2) ein Kreiselrechen (6.1, 6.2, 9.1, 9.2) zugeordnet ist, der sich am Außenendbereich seines Seitenträgers (4.1, 4.2, 5.1, 5.2) abstützt, und wobei die äußeren Kreiselrechen (6.1, 9.2) um eine Zusatzachse (23, 24) in eine Transportschutzstellung überführbar sind, **dadurch gekennzeichnet,** daß die Zusatzachsen (23, 24) etwa fahrtrichtungsparallel ausgerichtet sind und zumindest einer der einem äußeren Seitenträger (4.2, 5.2) zugeordneten Kreiselrechen (6.1, 9.2) mitsamt seinem zugehörigen Seitenträger (4.2, 5.2) um mehr als 90° in eine Transportschutzstellung klappbar ist, in der er sich in einem oberhalb des Mittelträgers (1) gelegenen sowie zumindest bereichsweise seitlich durch einen in Transportschutzstellung überführten mittleren Seitenträger (4.1, 5.1) begrenzbaren Raum erstreckt.

2. Heuwerbungsmaschine nach Anspruch 1, **dadurch gekennzeichnet,** daß die Zusatzachsen (21, 24) die Längsmittelachsen (25, 26) der Seitenträger (4.1 , 4.2, 5.1 , 5.2) in deren Betriebsstellung mit einem seitlichen Lageabstand ($l_1$) zur Hochachse (12) des Kreiselrechens (6.2, 9.1) des mittleren Seitenträgers (4.1, 5.1) schneiden und das Verhältnis von seitlichem Lageabstand ($l_1$) zum Abstand ($l_2$) der Hochachsen (12) der Kreiselrechen (6.1, 6.2, 9.1, 9.2) der jeweiligen beiden Seitenträger (4.1 , 4.2, 5.1 , 5.2) zueinander größer oder gleich 0,3 ist.

3. Heuwerbungsmaschine nach einem der Ansprüche 1 oder 2, **dadurch gekennzeichnet,** daß das Verhältnis des seitlichen Lageabstandes ($l_1$) zum Abstand ($l_2$) in etwa 0,4 ist und die Hochachsen (12) der äußeren Kreiselrechen (6.1, 9.2) in der Transportschutzstellung die Horizontale unter einem Winkel von etwa 20° schneiden.

4. Heuwerbungsmaschine nach einem der Ansprüche 1 bis 3, **dadurch gekennzeichnet,** daß die Antriebswelle (29) im Bereich der Seitenträger mit einem Kreuzgelenk (31) versehen ist, dessen Gelenkachsen jeweils mit der Zusatzachse (23, 24) in einer Ebene liegen.

5. Heuwerbungsmaschine nach einem der Ansprüche 1 bis 4, **dadurch gekennzeichnet,** daß die äußeren Seitenträger (4.2, 5.2) mitsamt den jeweiligen Kreiselrechen (6.1, 9.2) in die Transportschutzstellung klappbar sind.

6. Heuwerbungsmaschine nach einem der Ansprüche 1 bis 5, **dadurch gekennzeichnet,** daß die Laufräder (14) der äußeren Seitenträger (4.2, 5.2) gegenüber den Hochachsen (12) der äußeren Kreiselrechen (6.1, 9.2) seitlich zur jeweiligen Außenseite der Maschine versetzt angeordnet sind.

7. Heuwerbungsmaschine nach einem der Ansprüche 1 bis 6 mit einem Druckmittelantrieb (17, 18) zum Verschwenken der Seitenträger (4.1, 4.2, 5.1, 5.2), **dadurch gekennzeichnet,** daß der Druckmittelantrieb (17, 18) gelenkig an einem Stellhebel (36) angreift, der einenends über ein Gelenk mit fahrtrichtungsparalleler Gelenkachse (41) mit dem äußeren Ende des mittleren Seitenträgers (4.1, 5.1) verbunden und anderenends am äußeren Seitenträger (4.2, 5.2) angreift.

8. Heuwerbungsmaschine nach Anspruch 7, **dadurch gekennzeichnet,** daß der Stellhebel (36) beweglich in einer am äußeren Seitenträger (4.2, 5.2) vorgesehenen, Endanschläge (38, 39) aufweisenden Führungskulisse (37) angeordnet ist.

Fig. 1

Fig. 2

EP 0 429 433 A2

Fig. 3